# EUROPEAN PATENT SPECIFICATION

(11) **EP 1 006 304 B1**
(45) Date of publication and mention of the grant of the patent: **09.04.2003**
(21) Application number: 99500225.0
(22) Date of filing: 25.11.1999
(51) Int. Cl.: F16L 11/04, F16L 11/08, F16L 19/028, F16L 33/28

(54) **An assembly of flexible connecting elements for sanitary use and method for forming said elements**
Gelenkiges Verbindungselement für sanitäre Benutzung und Verfahren zu seiner Herstellung
Elément de connexion flexible pour usage sanitaire et son procédé de fabrication

(30) Priority: 27.11.1998 ES 9802492
(43) Date of publication of application: 07.06.2000
(73) Proprietor: Componentes Kuda, S.L., 08005 Barcelona (ES)
(72) Inventor: Gomez Singla, Manuel, 08005 Barcelona (ES); Gimeno Gracia, Mario, 08005 Barcelona (ES)
(74) Representative: Ponti Sales, Adelaida

(56) References cited:
- EP-A- 0 093 064
- WO-A-91/08101
- DE-A- 1 815 669
- DE-A- 19 503 346
- US-A- 4 871 499

## Description

The present invention relates to an assembly of flexible connecting elements for sanitary use made of plastic material and to a method for forming such elements.

### BACKGROUND OF THE INVENTION

Known in the art is the use of metal pipes in sanitary use applications. Also known are many complements such as connectors, elbows or mouths also made of metal materials.

Most of this type of pipes are made of copper, a material which of itself has a good number of advantages in terms of its capacity and durability for this type of applications.

This type of pipes nevertheless has the disadvantage that, due to the fact that they are rigid pipes, the possibilities for handling and fitting them are rather few.

Another type of sanitary pipe also used are those which employ pipes based on materials made of elastomeric rubber with exterior reinforcement of braided steel mesh.

This type of pipes has the disadvantage of using rubber as a material for sanitary use, when in fact it is not a material suitable for these applications, and these pipes further suffer from oxidation processes within shorter times than the buildings require, and they may become totally or partially obstructed by rotation of the nut as they are tightened.

Also known is the connector for water pipes in sanitary installations described in the Spanish utility model ES-U193391. Said document described a connector fittable to a plastic pipe, which nevertheless had the disadvantage that it did not ensure fluidtightness since connector and pipe were joined simply using adhesive. Furthermore, at the time this document was filed the plastics used in sanitary pipes did not withstand the working stresses at certain temperatures, thus bending and deforming.

DE 195 03 346 refers to a metal connector fixed to the end of a polyethilene pipe by means of a covering made of polyethylene. O-rings are arranged between the covering and the connector in order to avoid gas to pass through both pieces. The end of the pipe fits in an abutment arranged in the internal end of the cylindrical part of the connector. This solution is in some extent complex.

DE 18 15 669 refers to a flexible plastic pipe having an integral end piece moulded with the pipe, said end piece having a flange where a free plastic connector abuts. The connector is fixed to the pipe during moulding. This document intends to solve tightness problems between pipe and connectors but in practice a good tightness can not be obtained by moulding.

### DESCRIPTION OF THE INVENTION

According to the invention the aforementioned disadvantages are solved by the assembly of claim 1.

Thanks to these characteristics, considerable facility is achieved in the fitting and subsequent installation of the assembly, since the pipe allows the transmission of rotation without losing its shape or clogging, thereby providing maximum fluidtightness of the joint, (135 bar) and allowing the pipe to be rotated by hand without need to use spanners in zones of difficult access.

Polypropylene copolymer is a thermoplastic with a good performance in terms of flexibility, working stresses, temperatures and innocuousness.

Preferably, the themoplastic material of the pipe is polypropylene copolymer and the connectors are made of polypropylene homopolymer reinforced with glass fibre.

This difference between the types of plastic is due to the fact that the polypropylene homopolymer used in the connectors is remarkably more rigid than the polypropylene copolymer used in the pipes, in which a larger degree of flexibility is required.

Moreover, the glass-fibre reinforcement of the connectors lends them greater rigidity, so that they perform the function of working optimally in joining the pipe and the wall or the element to which the pipe is attached.

The flexible pipe can be reinforced with metal braiding.

Thanks to this characteristic, when the pipe to be used has to withstand large pressures or a considerable cutting stress, its strength is increased by the addition of a metal braiding that provides rigidity while permitting a considerable degree of flexibility.

The assembly of the invention can thus carry out the same functions as the metal pipes used at present, but with the advantage of being able to provide better performance, in terms of both flexibility and durability.

A method for forming flexible connecting elements for sanitary use according to the invention is disclosed in claim 3.

Thanks to these characteristics, by means of a relatively simple method as described above, it is possible to manufacture easily and rapidly lengths of pipe provided with their respective connectors, said elements thus being ready to be installed directly.

### BRIEF DESCRIPTION OF THE DRAWINGS

In order to facilitate the description of all that has been set out above, some drawings are attached which, schematically and solely by way of non-restrictive example, show a practical case of embodiment of the flexible connecting elements of the invention, in which:
Figures 1 to 4 are partially lengthed views of a pipe attached to three different types of attachments or connectors.

### DESCRIPTION OF A PREFERRED EMBODIMENT

Figure 1 shows an embodiment of the invention in which a pipe 1a is thermally welded to a connector 3a. In this case, the connector 3a has an exterior thread at its free end.

Figures 2 to 4 show various embodiments in which a pipe length 1b 1c, 1d, is thermally welded to a connector 3b, 3c, 3d, respectively. In Figures 2 and 3 the free ends of the connectors 3b and 3c have an exterior thread, while the connector 3d of Figure 4 is not threaded.

Figure 3 shows how the inner surface of the end of the pipe 1 is inwardly chamfered at 4c.

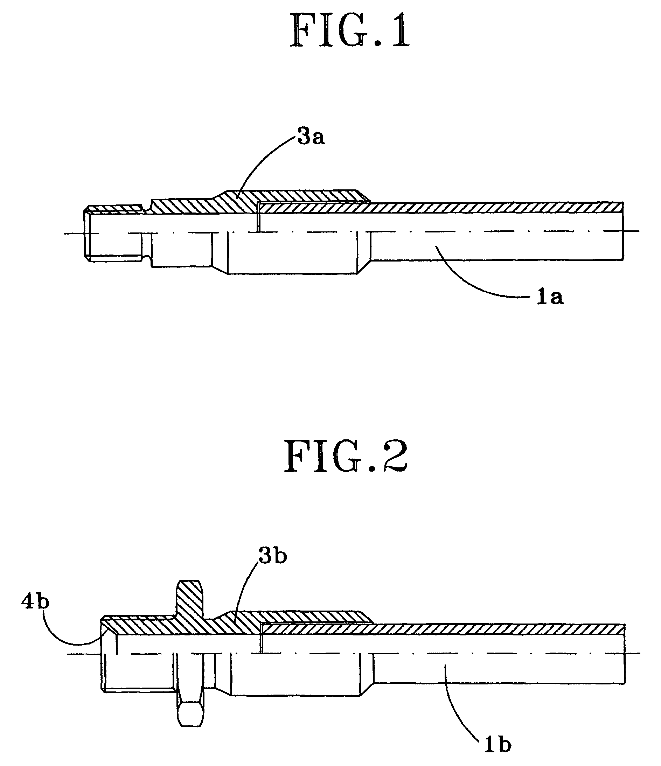

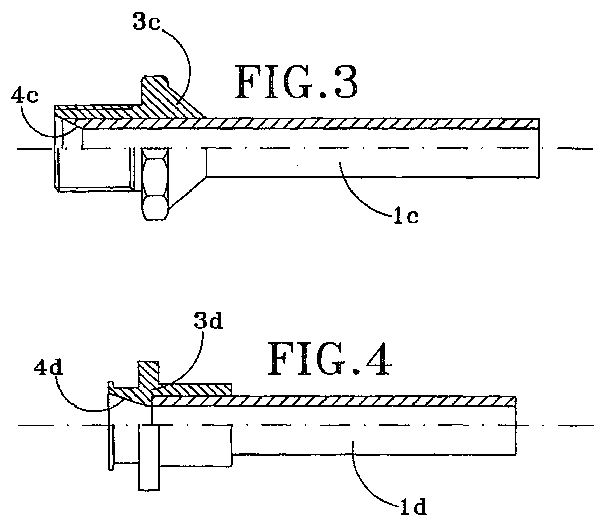

In a similar manner, the inner surface of the free end of the connectors 3b, 3c and 3d shown in Figures 2 to 4 have respective incuts 4b, 4c and 4d.

Independent of the object of the invention will be the materials used for manufacturing of the flexible connecting parts, the shapes and dimensions thereof and all accessory details they might present.

## Claims

1. An assembly of flexible connecting elements for sanitary use which comprises a flexible pipe (1a, 1b, 1c, 1d) and a pair of connectors (3a, 3b, 3c, 3d) attached to the ends of said pipe (1a, 1b, 1c, 1d), being both the pipe (1a, 1b, 1c, 1d) and the connectors (3a, 3b, 3c, 3d) made of thermoplastic material, **characterised in that** the themoplastic material of the pipe (1a, 1b 1c, 1d) is polypropylene copolymer and the connectors (3a, 3b, 3c, 3d) are made of polypropylene copolymer or polypropylene homopolymer reinforced with glass fibre, the pipe (1a, 1b 1c, 1d) and the connectors (3a, 3b, 3c, 3d) being thermally welded.

2. An assembly as claimed in Claim 1, **characterised in that** the flexible pipe (1a, 1b, 1c, 1d) is reinforced with metal braiding.

3. A method for forming flexible connecting elements for sanitary use according to claims 1 to 2, which consists in:
a) manufacturing lengths of pipe (1a, 1b, 1c, 1d) in a polypropylene copolymer material;
b) inserting a connector (3a, 3b, 3c, 3d) in polypropylene copolymer or in polypropylene homopolymer reinforced with glass fibre into at least one end of the pipe length (1a, 1b, 1c, 1d) until it is flush with the end of said pipe (1a, 1b, 1c, 1d);
c) thermally welding the connector (3a, 3b, 3c, 3d) to the end of the pipe (1a, 1b, 1c, 1d), in such a way that they are intimately attached to each other.

## Patentansprüche

1. Anordnung flexibler Verbindungselemente zur sanitären Verwendung, umfassend ein flexibles Rohr (1a, 1b, 1c, 1d) und ein Paar von Verbindungsteilen (3a, 3b, 3c, 3d), die an den Enden des Rohrs (1a, 1b, 1c, 1d) angebracht sind, wobei sowohl das Rohr (1a, 1b, 1c, 1d) als auch die Verbindungsteile (3a, 3b, 3c, 3d) aus einem thermoplastischen Material sind,
**dadurch gekennzeichnet, dass**
das thermoplastische Material des Rohrs (1a, 1b, 1c, 1d) ein Polypropylen-Copolymer ist und die Verbindungsteile (3a, 3b, 3c, 3d) aus einem Polypropylen-Copolymer oder Polypropylen-Homopolymer sind, verstärkt mit Glasfasern, wobei das Rohr (1a, 1b, 1c, 1d) und die Verbindungselemente (3a, 3b, 3c, 3d) thermisch verschweißt sind.

2. Vorrichtung nach Anspruch 1,
**dadurch gekennzeichnet, daß**
das flexible Rohr (1a, 1b, 1c, 1d) mit einem Metallgeflecht verstärkt ist.

3. Verfahren zum Bilden flexibler Verbindungselemente zur sanitären Verwendung nach Anspruch 1 bis 2, bestehend aus:
a) Anfertigen von Längen eines Rohrs (1a, 1b, 1c, 1d) aus einem Polypropylen-Copolymermaterial;
b) Einsetzen eines Verbindungsteils (3a, 3b, 3c, 3d) aus einem Polypropylen-Copolymer oder einem Polypropylen-Homopolymer, verstärkt mit Glasfasern, in mindestens ein Ende der Rohrlänge (1a, 1b, 1c, 1d) bis es bündig mit dem Ende des Rohrs (1a, 1b, 1c, 1d) ist;
c) thermisch Verschweißen des Verbindungsteils (3a, 3b, 3c, 3d) mit dem Ende des Rohrs (1a, 1b, 1c, 1d) derart, dass diese innig miteinander verbunden sind.

## Revendications

1. Assemblage d'éléments de raccordement flexibles pour une utilisation sanitaire comprenant un tuyau flexible (1a, 1b, 1c, 1d) et une paire de raccords (3a, 3b, 3c, 3d) fixés aux extrémités dudit tuyau (1a, 1b, 1c, 1d), le tuyau (1a, 1b, 1c, 1d) et les raccords (3a, 3b, 3c, 3d) étant tous deux fait d'un matériau thermoplastique, **caractérisé en ce que** le matériau thermoplastique du tuyau (1a, 1b, 1c, 1d) est un copolymère de polypropylène et les raccords (3a, 3b, 3c, 3d) sont fait de copolymère de polypropylène ou d'homopolymère de polypropylène renforcé par de la fibre de verre, le tuyau (1a, 1b, 1c, 1d) et les raccords (3a, 3b, 3c, 3d) étant thermosoudés.

2. Assemblage selon la revendication 1, **caractérisé en ce que** le tuyau flexible (1a, 1b, 1c, 1d) est renforcé par une tresse métallique.

3. Procédé de façonnage des éléments de raccord flexibles pour une utilisation sanitaire selon les revendications 1 et 2, comprenant les étapes :
a. de fabrication de longueurs de tuyau (1a, 1b, 1c, 1d) en matériau copolymère de polypropylène ;
b. d'insertion d'un raccord (3a, 3b, 3c, 3d) en copolymère de polypropylène ou en homopolymère de polypropylène renforcé par de la fibre de verre dans au moins l'une des extrémités de la longueur de tuyau (1a, 1b, 1c, 1d) jusqu'à ce qu'il soit de niveau avec l'extrémité dudit tuyau (1a, 1b, 1c, 1d) ;
c. de thermosoudure du raccord (3a, 3b, 3c, 3d) sur l'extrémité du tuyau (1a, 1b, 1c, 1d) de telle sorte que ces deux éléments soient étroitement joints l'un à l'autre.
